# EUROPÄISCHE PATENTANMELDUNG

(11) **EP 4 332 063 A1**
(43) Veröffentlichungstag der Anmeldung: **06.03.2024**
(21) Anmeldenummer: 22020424.2
(22) Anmeldetag: 02.09.2022
(51) Int. Cl.: C01C 1/04

(54) **VERFAHREN UND ANLAGE ZUR HERSTELLUNG VON AMMONIAK**

(71) Anmelder: Linde GmbH, 82049 Pullach (DE)
(72) Erfinder: Ettner, Florian, 82049 Pullach (DE); Vincentelli, Martin, 82049 Pullach (DE)
(74) Vertreter: Fischer, Werner

(57) **Zusammenfassung**

Es wird ein Verfahren (100) zur Herstellung von Ammoniak vorgeschlagen, bei dem ein Ammoniaksynthesegas (101) einer Verdichtung (10) unterworfen und einer teilweisen Umsetzung in einem Ammoniaksynthesereaktor (20) zugeführt wird, wobei dem Ammoniaksynthesereaktor (20) ein Gasgemisch (102) entnommen wird, das nicht umgesetzte Komponenten des Ammoniaksynthesegases (20) enthält, und das zumindest zu einem Teil einer Entspannung unter Verwendung einer Entspannungsmaschine (70) bereitgestellt unterworfen wird, wobei unter Verwendung der Entspannungsmaschine (70) ein oder mehrere, mit der Entspannungsmaschine (70) gekoppelte weitere Apparate angetrieben wird oder werden. Eine entsprechende Anlage ist ebenfalls Gegenstand der vorliegenden Erfindung.

## Beschreibung

Die Erfindung betrifft ein Verfahren und eine Anlage zur Herstellung von Ammoniak.

### Hintergrund

Bei der Herstellung von Ammoniak im großtechnischen Maßstab kann ein sogenanntes Ammoniaksynthesegas verwendet werden, worunter hier insbesondere ein Gasgemisch verstanden wird, das im Wesentlichen aus Stickstoff und Wasserstoff besteht sowie verfahrensbedingt Spuren von Inertgasen aufweist. Dieses kann in einem Synthesegasverdichter auf einen hohen Druck von typischerweise 100 bis 250 bar verdichtet und anschließend auf typischerweise 350 bis 500°C angewärmt werden.

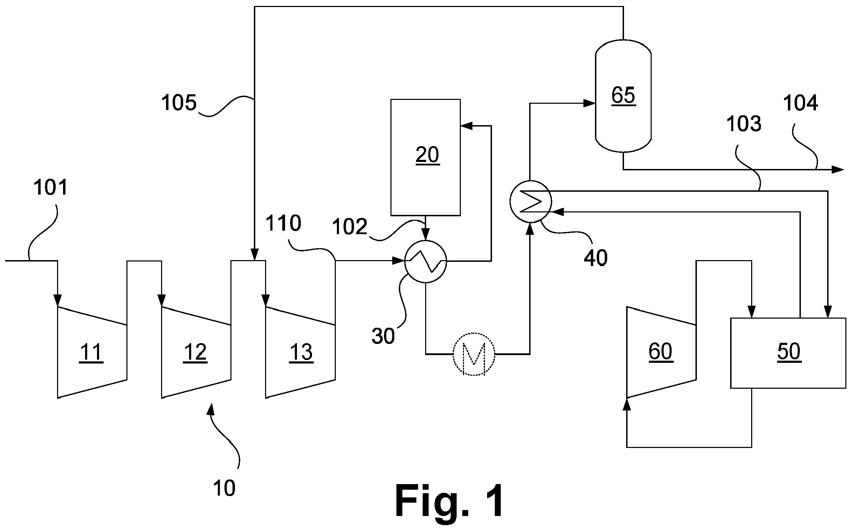

Da die Umsetzung des Ammoniaksynthesegases zu Ammoniak in einem Ammoniaksynthesereaktor aufgrund des ungünstigen Reaktionsgleichgewichts nur teilweise erfolgt, wird aus dem Gasgemisch, das den Ammoniaksynthesereaktor verlässt, Ammoniak als Reaktionsprodukt auskondensiert und das verbliebene, nicht umgesetzte Ammoniaksynthesegas in den Ammoniaksynthesereaktor rückgeführt. Details sind nochmals unter Bezugnahme auf Figur 1 unten erläutert.

Um den Ammoniak aus dem teilweise umgesetzten Ammoniaksynthesegas auszukondensieren, wird dieses so weit wie wirtschaftlich sinnvoll abgekühlt. Dabei wird die Hochtemperaturwärme des heißen Ammoniaksynthesegases am Austritt des Ammoniaksynthesereaktors typischerweise für eine Dampferzeugung genutzt und das darauffolgende Temperaturfenster für die Anwärmung des Ammoniaksynthesegases und die Anwärmung von Kesselspeisewasser. Die Abwärme für die abschließende Kühlung auf Umgebungstemperatur kann aufgrund des niedrigen Temperaturniveaus meist nicht wirtschaftlich sinnvoll genutzt werden und wird daher typischerweise über Luft- oder Wasserkühler abgeführt.

Zusätzlich muss, um ausreichend Ammoniak auszukondensieren und das Verfahren wirtschaftlich betreiben zu können, Energie zur Kälteerzeugung aufgewendet werden, um Temperaturen unterhalb der Umgebungstemperatur zu erreichen. Dafür ist eine Kälteanlage notwendig, die Kälte durch Verdichtung, Wärmeabfuhr und anschließende Entspannung eines Kältemittels erzeugt. Nach Stand der Technik wird als Kältemittel ebenfalls oft Ammoniak eingesetzt.

Der Energiebedarf sowie die Investitionskosten bei der Ammoniaksynthese sind in herkömmlichen Verfahren hauptsächlich durch die Leistung der verwendeten Verdichter (Verdichter für Ammoniaksynthesegas und Kältemittelverdichter) sowie deren Antrieben (Elektromotoren oder Turbinen) bestimmt.

Die vorliegende Erfindung stellt sich die Aufgabe, Verfahren zur Ammoniaksynthese der erläuterten Art effizienter und mit geringerem Energieaufwand und Investitionskosten zu realisieren.

### Offenbarung der Erfindung

Diese Aufgabe wird durch ein Verfahren und eine Anlage zur Herstellung von Ammoniak mit den Merkmalen der jeweiligen unabhängigen Patentansprüche gelöst. Ausgestaltungen sind Gegenstand der abhängigen Patentansprüche und der nachfolgenden Beschreibung.

Ein Aspekt des im Rahmen der vorliegenden Erfindung vorgeschlagenen Verfahrens besteht darin, ein aus einem Ammoniaksynthesereaktor austretendes Gasgemisch zu einer Entspannungsmaschine (synonym auch als Expander bezeichnet) zu leiten und so weit zu entspannen, dass die resultierende Wellenleistung des Expanders in etwa der Wellenleistung eines damit gekoppelten Apparats, und zwar beispielsweise, aber nicht notwendigerweise, des Kältemittelverdichters, entspricht und der Expander den gekoppelten Apparat damit teilweise oder vollständig antreibt. Bei dem gekoppelten Apparat kann es sich generell um eine beliebige Maschine, beispielsweise eine drehende Maschine wie einen Verdichter, eine Pumpe, einen Booster, ein Gebläse oder dergleichen, aber auch um einen Generator zur Erzeugung von elektrischem Strom handeln. Nachfolgend wird lediglich aus Gründen der Übersichtlichkeit und zur Vermeidung von Wiederholungen insbesondere auf den Kältemittelverdichter Bezug genommen.

Hierbei wird ein Verfahren zur Herstellung von Ammoniak vorgeschlagen, bei dem ein Ammoniaksynthesegas einer Verdichtung unterworfen und einer teilweisen Umsetzung in einem Ammoniaksynthesereaktor zugeführt wird.

Das Ammoniaksynthesegas ist insbesondere ein im Wesentlichen aus Wasserstoff und Stickstoff bestehendes Gasgemisch. Unter der Angabe "im Wesentlichen" soll hier insbesondere verstanden werden, dass in einer beanspruchten Zusammensetzung, einem Stoffstrom usw. neben den obligatorischen Bestandteilen weitere zugelassen sind, sofern sich die wesentlichen Merkmale der beanspruchten Zusammensetzung durch diese nicht signifikant ändern. Beispielsweise eignet sich ein "im Wesentlichen aus Wasserstoff und Stickstoff bestehendes" Ammoniaksynthesegas zur Herstellung von Ammoniak, ohne dass Nebenkomponenten oder Spurengase dies mengenmäßig oder reaktionstechnisch nennenswert beeinflussen würden. Ein "im Wesentlichen" eine oder mehrere Komponenten enthaltendes oder aus diesen bestehendes Gasgemisch kann insbesondere diese Komponenten zu mehr als 95, 99, 99,9 oder 99,99% in Summe oder als Einzelwerte aufweisen. Umgekehrt ist ein Gasgemisch "im Wesentlichen frei" von einer oder mehreren Komponenten, wenn es weniger als 5, 1, 0,1 oder 0,01% dieser Komponenten in Summe oder als Einzelwerte enthält. Die Prozentangaben können sich auf Mol-, Mengen- oder Volumenanteile beziehen.

Im Rahmen der vorliegenden Erfindung wird dem Ammoniaksynthesereaktor ein Gasgemisch entnommen, das (im Wesentlichen) Ammoniak und nicht umgesetzte Komponenten des Ammoniaksynthesegases enthält, und das zumindest zu einem Teil unter Verwendung einer Entspannungsmaschine entspannt wird, wobei unter Verwendung der Entspannungsmaschine zumindest ein weiterer, mit der Entspannungsmaschine gekoppelter Apparat angetrieben wird.

In Ausgestaltungen der Erfindung wird das dem Ammoniaksynthesereaktor entnommene Gasgemisch zumindest zu einem Teil mehreren Kühlschritten unterworfen, wobei die mehreren Kühlschritte einen Kühlschritt umfassen, der unter Verwendung eines in einem Kältemittelkreislauf geführten Kältemittels durchgeführt wird, wobei zumindest ein Teil des Kältemittels unter Verwendung eines Kältemittelverdichters verdichtet wird, und wobei zumindest ein Teil einer Antriebsleistung des Kältemittelverdichters unter Verwendung der Entspannungsmaschine bereitgestellt wird, in der zumindest ein Teil des dem Ammoniaksynthesereaktor entnommenen Gasgemischs entspannt wird.

Die Vorteile von Ausgestaltungen der vorliegenden Erfindung umfassen, dass ein Teil der im Synthesegas enthaltenen Energie als mechanische Leistung genutzt werden kann, wodurch weniger Energie in Form von Wärme im Dampferzeuger und Kesselspeisewasseranwärmer abgeführt werden muss. Im Gegensatz zu bekannten Verfahren muss im Rahmen der vorliegenden Erfindung eine geringere Antriebsleistung (beispielsweise eine Verdichterleistung für den Kältemittelverdichter) extern (beispielsweise als elektrische Leistung oder Dampfturbinenleistung) zugeführt werden. In bekannten Verfahren wird zugeführte mechanische Energie zum Großteil als Wärme abgeführt (über Dampferzeugung sowie Wärmeabfuhr an die Umgebung). Die Umwandlung von mechanischer Energie in Wärme stellt einen erheblichen Exergieverlust dar. Entsprechende Verluste können durch den Einsatz der vorliegenden Erfindung verringert werden.

In Ausgestaltungen der vorliegenden Erfindung wird unter Verwendung der Entspannungsmaschine mechanische Wellenleistung bereitgestellt, wobei zumindest ein Teil der mechanischen Wellenleistung der Entspannungsmaschine mechanisch in den gekoppelten Apparat, wie beispielsweise den Kältemittelverdichter, eingeleitet wird. Es kann also insbesondere eine direkte oder indirekte mechanische Kopplung erfolgen, sodass in einer derartigen Ausgestaltung Umwandlungsverluste vermieden werden können.

Ausgestaltungen der vorliegenden Erfindung können umfassen, dass eine oder mehrere Verdichterstufen des Kältemittelverdichters (soweit vorhanden), ggf. auch alle Verdichterstufen, unter Verwendung zumindest eines Teils der mechanischen Wellenleistung angetrieben werden. Entsprechendes gilt auch für einen Antrieb aller oder eines Teils von Untereinheiten eines anderen gekoppelten Apparats.

Generell können im Rahmen der vorliegenden Erfindung mehrstufige Turboverdichter zum Einsatz kommen. Der mechanische Aufbau von Turboverdichtern ist dem Fachmann grundsätzlich bekannt. In einem Turboverdichter erfolgt die Verdichtung des zu verdichtenden Mediums mittels Turbinenschaufeln, die auf einem Turbinenrad oder direkt auf einer Welle angeordnet sind. Ein Turboverdichter bildet dabei eine bauliche Einheit, die jedoch bei einem mehrstufigen Turboverdichter mehrere Verdichterstufen aufweisen kann. Eine Verdichterstufe umfasst dabei in der Regel ein Turbinenrad oder eine entsprechende Anordnung von Turbinenschaufeln. Alle dieser Verdichterstufen können von einer gemeinsamen Welle angetrieben werden. Es kann jedoch auch vorgesehen sein, die Verdichterstufen gruppenweise mit unterschiedlichen Wellen anzutreiben, wobei die Wellen über Getriebe miteinander verbunden sein können.

Eine zum Einsatz im Rahmen der vorliegenden Erfindung geeignete Entspannungsmaschine kann insbesondere ein Turboexpander sein. Ein Turboexpander kann dabei vergleichbar zu einem Turboverdichter aufgebaut sein, wobei jedoch durch Entspannung eines Fluids Wellenleistung generiert wird.

Für eine besonders effiziente mechanische Kopplung kann vorgesehen sein, dass eine oder mehrere Verdichterstufen des Kältemittelverdichters oder eine oder mehrere Untereinheiten eines anderen gekoppelten Apparats, oder der gekoppelte Apparat insgesamt, und eine oder mehrere Entspannungsstufen der Entspannungsmaschine auf einer gemeinsamen mechanischen Welle angeordnet sind. Auf diese Weise ist eine besonders direkte, verlustarme Übertragung der Leistung möglich.

In Ausgestaltungen der vorliegenden Erfindung kann aber auch vorgesehen sein, dass zumindest ein Teil der mechanischen Wellenleistung in einem Getriebe umgesetzt wird. Auf diese Weise kann insbesondere eine vorteilhafte Drehzahlanpassung vorgenommen werden, um beispielsweise unterschiedliche Volumenströme bzw. Mengen an Prozessgas, d.h. dem den Reaktor entnommenen Gasgemisch, und dem Kältemittel oder einem in einem anderen gekoppelten Apparat bearbeiteten, insbesondere verdichteten, Medium bearbeiten zu können.

In Ausgestaltungen der vorliegenden Erfindung kann auch vorgesehen sein, dass zumindest ein Teil der mechanischen Wellenleistung in elektrische Leistung umgewandelt wird. Diese elektrische Leistung kann beispielsweise auch zum Betrieb eines Elektromotors verwendet werden, der zumindest einen Teil der Antriebsleistung des Kältemittelverdichters aufbringt. Auch beliebige andere Einheiten wie Verdichter, Heizer, Gebläse und dergleichen können auf diese Weise angetrieben werden.

In Ausgestaltungen der vorliegenden Erfindung kann vorgesehen sein, dass die mechanische Wellenleistung der Entspannungsmaschine die Antriebsleistung des Kältemittelverdichters oder eines anderen gekoppelten Apparats übersteigt und ein die Antriebsleistung des Kältemittelverdichters oder des anderen gekoppelten Apparats übersteigender Anteil der mechanischen Wellenleistung der Entspannungsmaschine zum Antrieb einer oder mehrerer Einheiten verwendet wird, die aus einer oder mehrerer Verdichterstufen eines bei der Verdichtung des Ammoniaksynthesegases verwendeten Verdichters, einer oder mehrerer Kesselspeisewasserpumpen und einer oder mehreren Gasverdichtern oder Gasverdichterstufen ausgewählt ist oder sind. Entsprechende Ausgestaltungen der vorliegenden Erfindung können daher die bei der Entspannung generierte mechanische Leistung besonders vorteilhaft nutzen.

Die Entspannungsmaschine kann in Ausgestaltungen der vorliegenden Erfindung an unterschiedlichen geeigneten Positionen wie stromab des Ammoniaksynthesereaktors und stromauf oder stromab eines Kühlschritts der mehreren Kühlschritte angeordnet sein. Die Positionierung richtet sich nach der jeweiligen Zweckmäßigkeit und Baubarkeit.

In Ausgestaltungen der vorliegenden Erfindung kann das Verfahren in einem ersten Verfahrensmodus und einem zweiten Verfahrensmodus durchgeführt werden, wobei die Entspannungsmaschine in dem ersten Verfahrensmodus umgangen und erst in dem zweiten Verfahrensmodus zugeschaltet wird. Der erste Verfahrensmodus kann insbesondere bei Inbetriebnahme ("Hochfahren") einer entsprechenden Anlage durchgeführt werden, bis eine ausreichende Menge des aus dem Ammoniaksynthesereaktor austretenden Gases vorliegt.

Lediglich der Vollständigkeit halber sei hier angemerkt, dass in Ausgestaltungen der vorliegenden Erfindung ein in dem Ammoniaksynthesereaktor nicht umgesetzter Teil des Ammoniaksynthesegases in die Verdichtung zurückgeführt wird.

Die Ammoniaksynthese kann in einem Druckbereich von 100 bis 250bar Absolutdruck und/oder in einem Temperaturbereich von 350 bis 500°C durchgeführt werden. Es kann insbesondere eine Abwandlung eines an sich bekannten Haber-Bosch-Verfahrens zum Einsatz kommen.

Der Kühlschritt, der unter Verwendung des in dem Kältemittelkreislauf geführten Kältemittels durchgeführt wird, ist insbesondere ein Kühlschritt auf eine Temperatur in einem Temperaturbereich von -40 bis +40°C. Hierbei kann Ammoniak als das Kältemittel verwendet werden, wobei der Kältemittelkreislauf ein geschlossener oder offener Kältemittelkreislauf sein kann. Ein offener Kältemittelkreislauf zeichnet sich dabei dadurch aus, dass ein Teil des in der Ammoniaksynthese gebildeten Ammoniaks abgeschieden, entspannt, dadurch verdampft, und als Kältemittel verwendet wird, und das entsprechende Ammoniak danach in ein Produkt überführt wird. Ein Kältemittel in einem geschlossenen Kältemittelkreislauf hat dabei keinen stofflichen Kontakt mit dem Prozessgas, d.h. dem abzukühlenden Gasgemisch aus der Ammoniaksynthese.

Eine Anlage zur Herstellung von Ammoniak ist ebenfalls Gegenstand der vorliegenden Erfindung, wobei die Anlage dafür eingerichtet ist, ein Ammoniaksynthesegas einer Verdichtung zu unterwerfen und einer teilweisen Umsetzung in einem Ammoniaksynthesereaktor zuzuführen, dem Ammoniaksynthesereaktor ein Gasgemisch zu entnehmen, das nicht umgesetzte Komponenten des Ammoniaksynthesegases enthält, das Gasgemisch zumindest zu einem Teil unter Verwendung einer Entspannungsmaschine zu entspannen, und unter Verwendung der Entspannungsmaschine einen oder mehrere, mit der Entspannungsmaschine gekoppelten Apparate anzutreiben. Insbesondere kann die Anlage dafür eingerichtet sein, das Gasgemisch zumindest zum Teil mehreren Kühlschritten zu unterwerfen, einen Kühlschritt der mehreren Kühlschritte unter Verwendung eines in einem Kältemittelkreislauf geführten Kältemittels durchzuführen, zumindest einen Teil des Kältemittels unter Verwendung eines Kältemittelverdichters zu verdichten, und zumindest einen Teil einer Antriebsleistung des Kältemittelverdichters unter Verwendung der erwähnten Entspannungsmaschine bereitzustellen.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

### Kurze Beschreibung der Zeichnung

Ausführungsformen der Erfindung werden nachfolgend rein beispielhaft unter Bezugnahme auf die beigefügte Zeichnung beschrieben, wobei
Figur 1 ein Verfahren zur Ammoniaksynthese gemäß einer nicht erfindungsgemäßen Ausgestaltung veranschaulicht,
Figur 2 ein Verfahren zur Ammoniaksynthese gemäß einer Ausgestaltung der vorliegenden Erfindung veranschaulicht,
Figur 3 Teilaspekte eines Verfahrens zur Ammoniaksynthese gemäß einer Ausgestaltung der vorliegenden Erfindung veranschaulicht, und
Figur 4 Teilaspekte eines Verfahrens zur Ammoniaksynthese gemäß einer Ausgestaltung der vorliegenden Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

In Figur 1 ist ein Verfahren zur Ammoniaksynthese gemäß einer nicht erfindungsgemäßen Ausgestaltung in Form eines schematischen Diagramms veranschaulicht, auf das bereits eingangs Bezug genommen wurde.

In diesem Verfahren wird ein Ammoniaksynthesegas 101 einer Verdichtung 10 unterworfen, wobei die Verdichtung 10 auf den eingangs erwähnten Druck vorgenommen wird und dabei mehrere Verdichterstufen 11, 12 und 13 eines (Turbo-) Verdichters der erläuterten Art eingesetzt werden können. Auf einer Zwischenstufe kann ein Rückführstrom 105 zugespeist werden, der die erwähnten Komponenten von Ammoniaksynthesegas sowie nicht auskondensiertes Ammoniak enthält.

Das mit 110 bezeichnete, verdichtete Ammoniaksynthesegas 101 wird einer Erwärmung unterworfen, in einen Ammoniaksynthesereaktor 20 eingespeist und dort einer teilweisen Umsetzung unterworfen. Dem Ammoniaksynthesereaktor 20 wird ein Gasgemisch 102 entnommen, das nicht umgesetzte Komponenten des Ammoniaksynthesegases 110 enthält.

Das Gasgemisch 102 wird einer Abkühlung 30, insbesondere in einem Feed-Effluent-Wärmetauscher gegen das eingespeiste Ammoniaksynthesegas 110, unterworfen. Mehrere optionale weitere Abkühlschritte sind in Form eines gepunktet gezeichneten Wärmetauschers dargestellt. Ein Kühlschritt 40 wird unter Verwendung eines in einem Kältemittelkreislauf 50 geführten Kältemittels 103 durchgeführt wird, wobei zumindest ein Teil des Kältemittels 103 unter Verwendung eines Kältemittelverdichters 60 verdichtet wird. Das verdichtete Kältemittel kann insbesondere entspannt und in einen in dem Kühlschritt 40 verwendeten Wärmetauscher eingespeist werden.

Der Abkühlung nachgeschaltet ist eine Abscheidung 65 von flüssigem Ammoniak, wobei nicht umgesetztes Ammoniaksynthesegas sowie nicht auskondensiertes gasförmiges Ammoniak verbleibt und als Stoffstrom 105 in die Verdichtung 10 zurückgeführt werden kann, wie erwähnt. Flüssiger Ammoniak kann in Form eines Produktstroms 104 an die Anlagengrenze geführt werden.

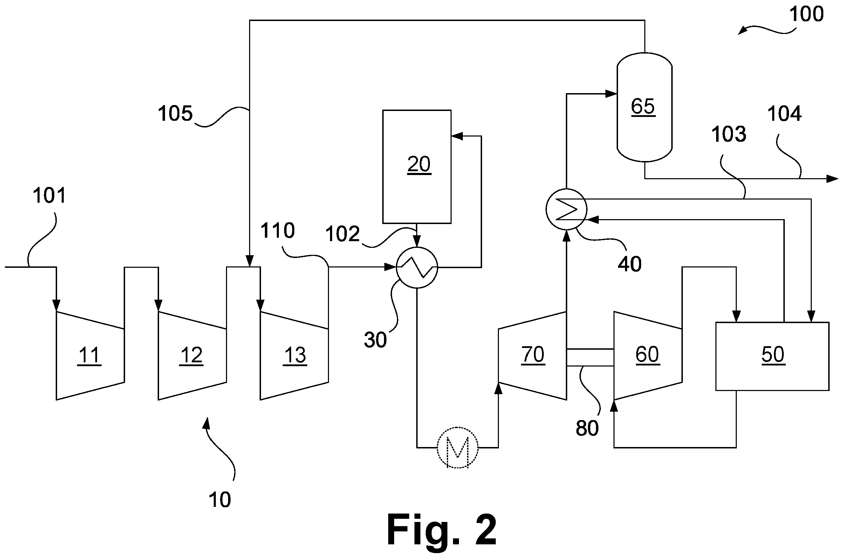

In Figur 2 ist ein Verfahren zur Ammoniaksynthese gemäß einer Ausgestaltung der vorliegenden Erfindung veranschaulicht und insgesamt mit 100 bezeichnet.

Aspekte der in Figur 2 veranschaulichten Ausgestaltung der Erfindung wurden bereits erläutert, so dass sich die nachfolgenden Erläuterungen im Wesentlichen auf die Unterschiede konzentrieren.

Wie in Figur 2 veranschaulicht, wird hier zumindest ein Teil einer Antriebsleistung des Kältemittelverdichters 60 unter Verwendung einer Entspannungsmaschine 70 bereitgestellt, in der zumindest ein Teil des dem Ammoniaksynthesereaktor 20 entnommenen Gasgemischs 102 entspannt wird. Wie hier veranschaulicht, können hier eine oder mehrere Verdichterstufen des Kältemittelverdichters 60 und eine oder mehrere Entspannungsstufen der Entspannungsmaschine 70 auf einer gemeinsamen mechanischen Welle 80 angeordnet sein.

Anstelle des Kältemittelverdichters 0 kann, wie mehrfach erwähnt, auch ein anderer, mit der Entspannungsmaschine 70 gekoppelter Apparat angetrieben werden, bei dem es sich um die zuvor erläuterten (drehenden) Maschinen oder einen Generator zur Erzeugung elektrischen Stroms handeln kann.

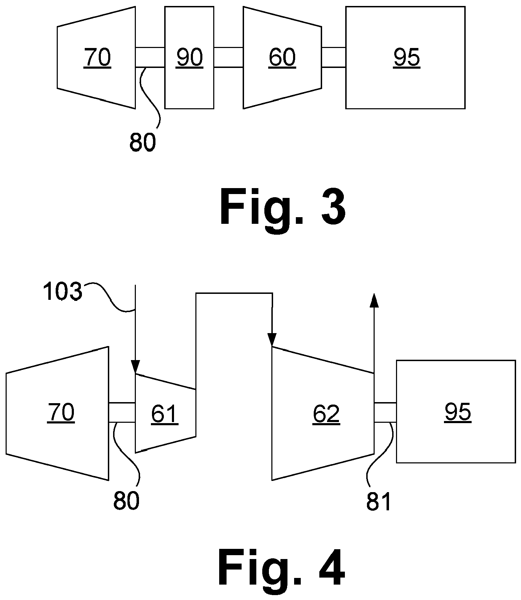

Figur 3 veranschaulicht Teilaspekte eines Verfahrens zur Ammoniaksynthese gemäß einer Ausgestaltung der vorliegenden Erfindung, wobei lediglich eine Kopplung von einer oder mehreren Verdichterstufen des Kältemittelverdichters 60 und einer oder mehreren Entspannungsstufen der Entspannungsmaschine 70 veranschaulicht ist. Wie hier dargestellt, ist hier ein Getriebe 90 vorgesehen, in dem zumindest ein Teil der mechanischen Wellenleistung umgesetzt wird. Ferner ist ein Hilfselektromotor 95 vorgesehen, der den Kältemittelverdichter 60 zusätzlich antreibt.

In Figur 4 sind weitere Teilaspekte eines Verfahrens zur Ammoniaksynthese gemäß einer weiteren Ausgestaltung der vorliegenden Erfindung veranschaulicht. Hier ist dargestellt, dass eine Verdichterstufe 61 des Kältemittelverdichters 60 mit der Entspannungsmaschine 70 über eine Welle 80 gekoppelt ist und eine Verdichterstufe 62, beispielsweise für höheren Druck, mit einem Hilfselektromotor 95 über eine weitere Welle 81 angetrieben wird.

Generell soll immer dann, wenn vorstehend von einem Antrieb "eines Verdichters" mittels "einer Entspannungsmaschine" die Rede ist immer auch einen Antrieb nur eines Teils der vorhanden Verdichterstufen und mittels nur eines Teils der vorhandenen Expanderstufen gemeint sein, ohne dass dies spezifisch angegeben ist.

## Patentansprüche

1. Verfahren (100) zur Herstellung von Ammoniak, bei dem ein Ammoniaksynthesegas (101) einer Verdichtung (10) unterworfen und einer teilweisen Umsetzung in einem Ammoniaksynthesereaktor (20) zugeführt wird, wobei dem Ammoniaksynthesereaktor (20) ein Gasgemisch (102) entnommen wird, das Ammoniak und nicht umgesetzte Komponenten des Ammoniaksynthesegases (20) enthält, wobei das Gasgemisch (102) zumindest zu einem Teil unter Verwendung einer Entspannungsmaschine (70) entspannt wird, und wobei unter Verwendung der Entspannungsmaschine (70) ein oder mehrere weitere, mit der Entspannungsmaschine (70) gekoppelte Apparate angetrieben wird oder werden.

2. Verfahren (100) nach Anspruch 1, bei dem zumindest ein Teil des dem Ammoniaksynthesereaktor (20) entnommenen Gasgemischs (102) mehreren Kühlschritten (30, 40) unterworfen wird, wobei die mehreren Kühlschritte (30, 40) einen Kühlschritt (40) umfassen, der unter Verwendung eines in einem Kältemittelkreislauf (50) geführten Kältemittels (103) durchgeführt wird, wobei zumindest ein Teil des Kältemittels (103) unter Verwendung eines Kältemittelverdichters (60) verdichtet wird, wobei zumindest ein Teil einer Antriebsleistung des Kältemittelverdichters als dem oder einem der mit der Entspannungsmaschine (70) gekoppelten Apparate (60) unter Verwendung der Entspannungsmaschine (70) bereitgestellt wird.

3. Verfahren (100) nach Anspruch 1 oder 2, bei dem unter Verwendung der Entspannungsmaschine (70) mechanische Wellenleistung bereitgestellt wird, wobei zumindest ein Teil der mechanischen Wellenleistung der Entspannungsmaschine (70) in den oder die mit der Entspannungsmaschine (70) gekoppelten Apparate eingeleitet wird.

4. Verfahren (100) nach Anspruch 3, bei dem eine oder mehrere Verdichterstufen des einen oder der mehreren weiteren, mit der Entspannungsmaschine (70) gekoppelten Apparate (60) unter Verwendung zumindest eines Teils der mechanischen Wellenleistung angetrieben werden.

5. Verfahren (100) nach Anspruch 3 oder 4, bei dem eine oder mehrere Verdichterstufen des einen oder der mehreren weiteren, mit der Entspannungsmaschine (70) gekoppelten Apparate (60) und eine oder mehrere Entspannungsstufen der Entspannungsmaschine (70) auf einer gemeinsamen mechanischen Welle (80) angeordnet sind.

6. Verfahren (100) nach einem der Ansprüche 3 bis 5, bei dem zumindest ein Teil der mechanischen Wellenleistung in einem Getriebe (90) umgesetzt wird.

7. Verfahren (100) nach einem der Ansprüche 3 bis 6, bei dem zumindest ein Teil der mechanischen Wellenleistung in elektrische Leistung umgewandelt wird.

8. Verfahren (100) nach einem der vorstehenden Ansprüche, bei dem die mechanische Wellenleistung die Entspannungsmaschine (70) die Antriebsleistung des einen oder der mehreren weiteren, mit der Entspannungsmaschine (70) gekoppelten Apparate (60) übersteigt und ein die Antriebsleistung des Kältemittelverdichters (60) übersteigender Anteil der mechanischen Wellenleistung der Entspannungsmaschine (70) zum Antrieb einer oder mehrerer Einheiten verwendet wird, die aus einer oder mehrerer Verdichterstufen (11, 12, 13) eines bei der Verdichtung (10) des Ammoniaksynthesegases (101) verwendeten Verdichters, einer oder mehrerer Kesselspeisewasserpumpen und einer oder mehreren Gasverdichtern oder Gasverdichterstufen ausgewählt ist oder sind.

9. Verfahren (100) nach einem der vorstehenden Ansprüche, bei dem die Entspannungsmaschine (70) stromab des Ammoniaksynthesereaktors (20) und stromauf oder stromab eines Kühlschritts (30) der mehreren Kühlschritte (40, 50) eingerichtet ist, angeordnet ist.

10. Verfahren (100) nach einem der vorstehenden Ansprüche, das in einem ersten Verfahrensmodus und einem zweiten Verfahrensmodus durchgeführt wird, wobei die Entspannungsmaschine (70) in dem ersten Verfahrensmodus umgangen und erst in dem zweiten Verfahrensmodus zugeschaltet wird.

11. Verfahren (100) nach einem der vorstehenden Ansprüche, bei dem ein in dem Ammoniaksynthesereaktor (20) nicht umgesetzter Teil des Ammoniaksynthesegases in die Verdichtung (10) zurückgeführt wird.

12. Verfahren (100) nach einem der vorstehenden Ansprüche, bei dem die Ammoniaksynthese auf einem Druck in einem Druckbereich von 100 bis 250bar Absolutdruck und/oder auf einer Temperatur in einem Temperaturbereich von 350 bis 500°C durchgeführt wird.

13. Verfahren (100) nach einem der vorstehenden Ansprüche, bei dem der Kühlschritt (40), der unter Verwendung des in dem Kältemittelkreislauf (50) geführten Kältemittels (103) durchgeführt wird, ein Kühlschritt auf eine Temperatur in einem Temperaturbereich von -40 bis +40°C ist.

14. Verfahren (100) nach einem der vorstehenden Ansprüche, bei dem Ammoniak als das Kältemittel verwendet wird, wobei der Kältemittelkreislauf (50) ein geschlossener oder offener Kältemittelkreislauf ist.

15. Anlage zur Herstellung von Ammoniak, die dafür eingerichtet ist, ein Ammoniaksynthesegas (101) einer Verdichtung (10) zu unterwerfen und einer teilweisen Umsetzung in einem Ammoniaksynthesereaktor (20) zuzuführen, dem Ammoniaksynthesereaktor (20) ein Gasgemisch (102) zu entnehmen, das Ammoniak und nicht umgesetzte Komponenten des Ammoniaksynthesegases (20) enthält, das Gasgemisch (102) zumindest zu einem Teil einer Entspannung unter Verwendung einer Entspannungsmaschine (70) anzutreiben, und unter Verwendung der Entspannungsmaschine (70) bereitzustellen einen oder mehrere, mit der Entspannungsmaschine (70) gekoppelte Apparate anzutreiben.
